# EUROPEAN PATENT APPLICATION

(11) **EP 1 416 601 A2**
(43) Date of publication of application: **06.05.2004**
(21) Application number: 03394099.0
(22) Date of filing: 30.10.2003
(51) Int. Cl.: H02G 3/08, H02G 3/12

(54) **Electrical mounting box**

(30) Priority: 30.10.2002 IE 20020847
(71) Applicant: Sorang Limited, Clarenbridge, Co Galway (GB)
(72) Inventor: Carr, Mike Sorang Limited, Clarenbridge Co Galway (IE)
(74) Representative: Gordon, Naoise Padhraic Edward

(57) **Abstract**

An electrical mounting box (1) comprising a conducting box (2) and an earth wire (11) wherein the conducting box (2) is compositely formed with the earth wire (11).

## Description

This invention relates to an electrical mounting box.

Electrical mounting boxes are well-known for housing electrical circuitry such as light switches, plug sockets, cooker switches, telephone sockets and dimmer switches. To this end, electrical mounting boxes have two main conformations, namely single gang (in which one switch or plug is housed in each mounting box) and multi-gang (in which a plurality of switches or plugs are housed in each mounting box).

A variety of electrical mounting boxes are currently on the market including plastics surface mounted boxes and inset metal boxes for flush mounted cover switches or plug sockets. In addition, external wall-mounted mounting boxes are frequently used in industrial or other settings in which the aesthetic attributes of the mounting box are not a priority. A conventional single gang electrical mounting box is installed in a wall in a number of steps. In a first step, an electrical mounting box is placed into a chased groove in a wall. A switch or plug circuit to be housed in the mounting box is powered by an electrical cable hidden in an outer conduit. The outer conduit is itself hidden in the chased groove in the wall. The electrical mounting box can also be placed behind plasterboard in a dry lined application.

In a second step of the installation process, a electrician embeds the electrical mounting box in the chased groove. It is then plastered by a plasterer with sufficient plaster to ensure that the electrical mounting box is positioned flush with the plastered wall.

In a third step of the installation process, after allowing the plaster sufficient time to dry, an electrician connects the live and neutral wires of the hidden cable to an appropriate switch or socket circuit contained in the electrical mounting box.

Conventional electrical mounting boxes are provided with a screw fitting to enable an earth wire to be connected between the grounded electrical mounting box and the switch or socket circuit housed within. However, during the plastering stage of the above-described installation process, the screw of the screw fitting is frequently lost or embedded behind plaster which has not been applied correctly. These mishaps cause considerable time wastage during the third stage of the installation process as the electrician is required to remove or clear plaster from the screw fitting to enable the earth wire to be connected thereto. In particularly difficult circumstances these mishaps may even necessitate the repositioning of the earth wire attachment to the electrical mounting box. In general, as much as twenty minutes may be lost during the third stage of the installation process because of these problems.

Furthermore, even if the screw fitting is not damaged during the plastering stage of the installation process, the process of attaching the earth wire to the electrical mounting box still involves a number of manipulations of both components. These manipulations can take several minutes to perform. The traditional method of attaching an earth wire to a single gang electrical mounting box requires the electrician to cut approximately 80mm of earth wire and snip approximately 8 mm from both ends of the wire. The electrician is then required to insert the wire into the screw fitting and tighten the screw fitting by means of a screwdriver. Finally, the electrician is required to pull on the earth wire to ensure that it is secured within the screw fitting.

An object of the invention is to overcome the problems in the prior art.

According to the invention there is provided a pre-formed electrical mounting box adapted to retain an earth wire comprising a conducting box and a permanent connection means being in electrical contact with the electrical mounting box and suitable for permanently connecting the earth wire to the conducting box.

Preferably, the permanent connection means is a weld.

Desirably, the permanent connection means is a pre-formed earth wire retaining member.

Desirably, at least one end of the earth wire is provided with an engaging member which is slidably insertable into the pre-formed earth wire retaining member.

Preferably, the pre-formed earth wire retaining member is pressure activated to irreversibly retain an engaging member contained therein.

Preferably, the conducting box is formed by progression route punching and subsequent folding.

According to a second aspect of the invention there is provided a pre-formed electrical mounting box comprising a conducting box and an earth wire wherein the conducting box is compositely formed with the earth wire.

According to a third aspect of the invention there is provided a method of manufacturing a pre-formed electrical mounting box adapted to retain an earth wire comprising a conducting box and a permanent connection means comprising the steps of :
connecting the permanent connection means to the conducting box so that the permanent connection means is in electrical contact with the conducting box; and
permanently connecting the earth wire to the conducting box through the permanent connection means.

Preferably, the conducting box is formed by progression route punching and folded into an appropriate shape.

Preferably, an earth wire retaining member is fixed to the interior of the conducting box.

Desirably, a first end of an earth wire is stripped of its insulation.

Desirably, an engaging member is fixed to the first end of the earth wire.

Preferably, the engaging member is slid into the earth wire retaining member and a force is applied to the earth wire retaining member and engaging member to irreversibly connect the earth wire retaining member and engaging member.

According to a fourth aspect of the invention there is provided a method of installing a pre-formed electrical mounting box comprising a conducting box and a permanent connection means being in electrical contact with the electrical mounting box and suitable for permanently connecting the earth wire to the conducting box comprising the steps of:
placing the pre-formed electrical mounting box into a wall;
threading power cables into the conducting box;
plastering the pre-formed electrical mounting box into the wall;
connecting the power cables to a socket or switch circuit; and
connecting the earth wire which is in permanent connection to the conducting box to the socket or switch circuit;
where the method does not require the step of connecting the earth wire to the conducting box.

The electrical mounting box in accordance with any aspect of the invention complies with the British Standards for such fittings.

Further, the cost of the electrical mounting box in accordance with any aspect of the invention is comparable with that of a conventional electrical mounting box, whilst the labour costs in installing the electrical mounting box in accordance with any aspect of the invention are reduced compared with that of the conventional electrical mounting box.

Two embodiments of the invention will now be described by way of example only with reference to the accompanying drawings in which;
Figure 1 is a perspective view of a first embodiment of a single gang electrical mounting box in which an earth wire is welded to the electrical mounting box;
Figure 2 is a perspective view of the first embodiment of the single gang electrical mounting box installed in wall and connected to a electrical switch circuit; and
Figure 3 is a perspective view of a second embodiment of a single gang electrical mounting box in which an earth wire is retained in the electrical mounting box by an earth wire retaining member.

An electrical mounting box 1 includes an open-ended box 2 made of conducting material. The open-ended box 2 is provided with a back wall 3 and four side walls 4, 5, 6 and 7. A plurality of push-out ovular holes 8 and push-out circular holes 9 are cut into the back wall 3 and side walls 4, 5, 6 and 7 of the box 2. In use, the push-out ovular holes 8 and push-out circular holes 9 are designed to retain ovular and circular cables respectively.

The open-ended box 2 is made from a sheet of an appropriate galvanized steel by progression route punching and the resulting flat shape is then folded into the desired box-shape.

The open-ended box 2 is further provided with a plurality of screw-holding members 10 attached to at least two of its opposing sides walls (i.e. sidewalls 4 and 6 or 5 and 7). The screw-holding members 10 are attached to the side walls of the open-ended box 2 at positions proximal to its open end.

The electrical mounting box 1 is further provided with an earth wire 11, a first end 12 of which has its insulation removed. The second end 13 of the earth wire 11 has its insulation cut but not removed, thereby facilitating the easy removal of the insulation whilst protecting the copper wire contained within.

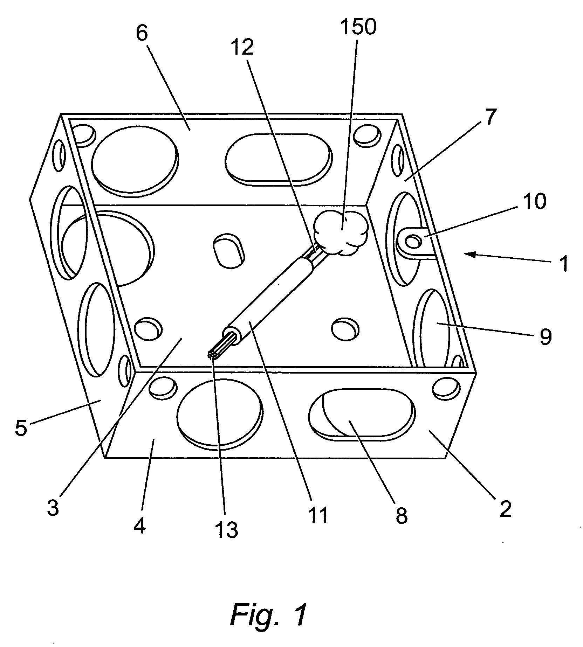

Referring to Figure 1 ,in a first embodiment of the invention, the first end 12 of the earth wire 11 is directly welded or otherwise fused to the back wall 3 of the open-ended box 2 so that the electrical mounting box 1 becomes a unitary structure of the earth wire 11 and the open-ended box 2. The earth wire 11 is thus an integral part of the resulting electrical mounting box 1.

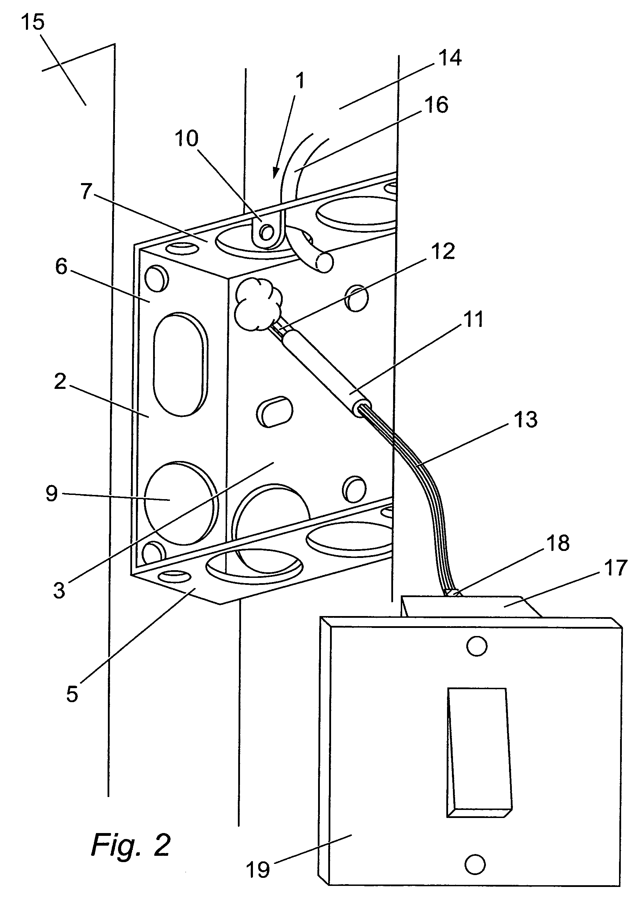

Referring to Figure 2, in use the electrical mounting box 1 is placed in a chased groove 14 in a wall 15 in the same way as a conventional electrical mounting box. Electrical cables 16 are also hidden in a conduit in the chased groove 14 and threaded into the open-ended box 2 through the push-out ovular holes 8 or push-out circular holes 9 in its back wall 3 or side walls 4, 5, 6 or 7.

The electrical mounting box 1 is plastered into place in the same way as a conventional electrical mounting box and the live and neutral wires of the power cables connected thereto.

However, when connecting an earth wire 11 between the electrical mounting box 1 and a switch or socket circuit 17 to be housed therein, it is not necessary to screw the earth wire 11 to the electrical mounting box 1 since the first end 12 of the earth wire 11 is already attached to the open-ended box 2. The second end 13 of the earth wire 11 is stripped of its insulation and screwed into a screw terminal 18 of the appropriate switch or socket circuit 17.

The screw-holding members 10 attached to the sidewalls of the open-ended box 2 enable the face-plate 19 of the switch or socket circuit 17 to be positioned in a variety of orientations relative to the electrical mounting box 1.

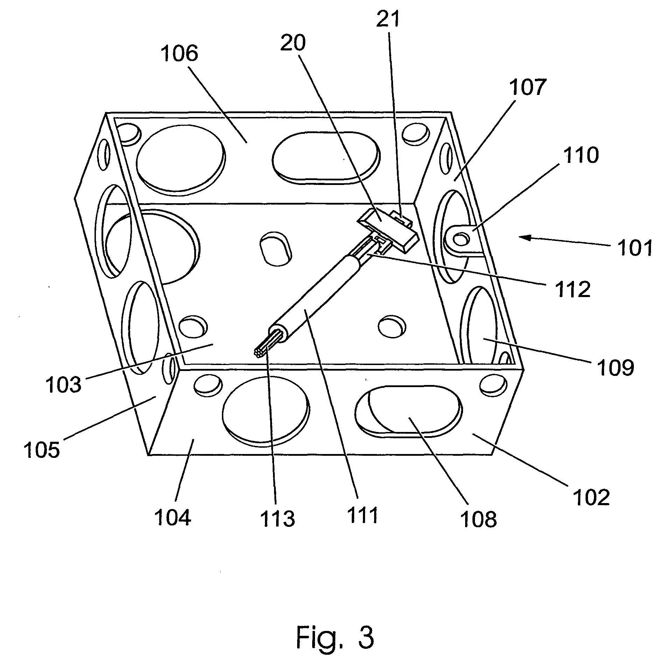

Referring to Figure 3, in a second embodiment of the invention the electrical mounting box 101 is further provided with at least one earth wire retaining member 20 attached to the interior of the open-ended box 102 in at least one corner position of the back wall 103. The first end 112 of the earth wire 111 is provided with an engaging member 21 connected to the copper wire contained within the earth wire 111.

During the manufacture of the electrical mounting box 101 the engaging member 21 is connected to the first end 112 of the earth wire 111 is slidably inserted into the earth wire retaining member 20. A force is then applied to the engaging member 21 and earth wire retaining member 20 to cause permanent connection of the earth wire retaining member 20 to the engaging member 21.

The installation process for the second embodiment of the invention proceeds in a similar manner to that of the first embodiment.
It is envisaged that the electrical mounting box structure of the first and second embodiments could also be used for fitting earth wires to computer chassis and other electrical boxes, where the method of attachment of the earth wire to the equipment concerned would provide an improved electrical connection than conventional attachment methods.

## Claims

1. A pre-formed electrical mounting box (1) adapted to retain an earth wire (11) comprising a conducting box (2) and a permanent connection means being in electrical contact with the electrical mounting box (1) and suitable for permanently connecting the earth wire (11) to the conducting box (2).

2. A pre-formed electrical mounting box (1) as claimed in Claim 1 wherein the permanent connection means is a weld.

3. A pre-formed electrical mounting box (1) as claimed in Claim 1 wherein the permanent connection means is a pre-formed earth wire retaining member (19).

4. An electrical mounting box (1) as claimed in Claim 3 wherein at least one end of the earth wire (11) is provided with an engaging member (20) which is slidably insertable into the pre-formed earth wire retaining member (19).

5. An electrical mounting box (1) as claimed in Claim 3 or Claim 4 wherein the pre-formed earth wire retaining member (11) is pressure activated to irreversibly retain an engaging member (20) contained therein.

6. An electrical mounting box (1) as claimed in any of the preceding Claims wherein the box is formed by progression route punching and subsequent folding.

7. An electrical mounting box (1) comprising a conducting box (2) and an earth wire (11) wherein the conducting box (2) is compositely formed with the earth wire (11).

8. A method of manufacturing a pre-formed electrical mounting box (1) adapted to retain an earth wire (11) comprising a conducting box (2) and a permanent connection means comprising the steps of:
connecting the permanent connection means to the conducting box (2) so that the permanent connection means is in electrical contact with the conducting box (2); and
permanently connecting the earth wire (11) to the conducting box (2) through the permanent connection means.

9. A method of manufacturing a pre-formed electrical mounting box (1) comprising steps of:
forming a conducting box (2) by progression route punching;
folding the conducting box (2) into an appropriate shape;
fixing an earth wire retaining member (19) to the interior of the conducting box (2);
stripping a first end (12) of an earth wire (11) of its insulation;
fixing an engaging member (20) to the first end (12) of the earth wire (11);
sliding the engaging member (20) of the earth wire (11) into the earth wire retaining member (19); and
applying a force to the earth wire retaining member (19) and engaging member (20) to irreversibly connect the earth wire retaining member (19) and engaging member (20).

10. A method of installing a pre-formed electrical mounting box (1) comprising a conducting box (2) and a permanent connection means being in electrical contact with the electrical mounting box (1) and suitable for permanently connecting the earth wire (11) to the conducting box (2) comprising the steps of:
placing the pre-formed electrical mounting box (1) into a wall (15);
threading power cables (16) into the conducting box (2);
plastering the pre-formed electrical mounting box (1) into the wall (15);
connecting the power cables (16) to a socket or switch circuit (17); and
connecting the earth wire (11) which is in permanent connection to the conducting box (2) to the socket or switch circuit (17);
wherein the method does not require the step of connecting the earth wire (11) to the conducting box (2).
